Europäisches Patentamt

European Patent Office

Office européen des brevets

(11) Numéro de publication: **0 401 081**
**A1**

## (12) DEMANDE DE BREVET EUROPEEN

(21) Numéro de dépôt: 90401345.5

(22) Date de dépôt: 21.05.90

(51) Int. Cl.⁵: **B60J 5/06**

(30) Priorité: **01.06.89 FR 8907258**

(43) Date de publication de la demande:
**05.12.90 Bulletin 90/49**

(84) Etats contractants désignés:
**DE GB IT**

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Mermoz, André**
**128 rue Salvador Allende**
**F-92000 Nanterre(FR)**

(74) Mandataire: **Durand, Yves Armand Louis et al**
**Cabinet Z. Weinstein 20, Avenue de**
**Friedland**
**F-75008 Paris(FR)**

(54) **Dispositif de guidage d'une porte coulissante et véhicule automobile équipé d'un tel dispositif.**

(57) La présente invention concerne un dispositif de guidage d'une porte coulissante de véhicule.

Ce dispositif comprend essentiellement un bras (4) fixé par une extrémité (4a) à la porte coulissante (P) par l'intermédiaire d'une articulation à axe sensiblement vertical (5), tandis que l'autre extrémité (4b) du bras (4) porte trois galets (6, 7, 8) à axes également sensiblement verticaux (6a, 7a, 8a) roulant sur un rail (2), l'un (6) de ces galets roulant sur la face interne du rail (2) et les deux autres galets (7, 8) roulant sur la face externe de ce rail qui comporte une extrémité (9) repliée vers l'intérieur et constituant à elle seule une butée de fin de course neutralisant les trois galets de sorte que le galet (6) sert d'axe de pivotement du bras (4) pour permettre notamment le rapprochement de la porte (P) de la caisse du véhicule, lorsqu'on ferme cette porte.

Ce dispositf s'applique par exemple aux portes coulissantes des véhicules utilitaires.

FIG. 1

## Dispositif de guidage d'une porte coulissante et véhicule automobile équipé d'un tel dispositif.

La présente invention a essentiellement pour objet un dispositif de guidage d'une porte coulissante pour un véhicule automobile par exemple.

Elle vise également un véhicule automobile, tel que par exemple un véhicule utilitaire, équipé de ce dispositif.

On a déjà proposé des systèmes de guidage pour portes coulissantes de véhicule, qui comprennent au moins un galet porté par un bras solidaire de la porte, ce galet roulant en étant guidé dans un rail fixé à la caisse du véhicule au voisinage de la bordure latérale du pavillon du véhicule et s'étendant sensiblement parallèlement à cette bordure latérale.

Toutefois dans ce genre de système, la forme du ou des rails doit présenter des parties faisant saillie en direction de l'habitacle du véhicule, ce qui, comme on le comprend, est préjudiciable au volume de cet habitacle et à un bon dimensionnement de la caisse du véhicule, sans parler du fait qu'avec les dispositifs de guidage connus, il y avait des risques de coincement de la porte coulissante à la fermeture et à l'ouverture.

Aussi, la présente invention a pour but de remédier notamment aux inconvénients ci-dessus, en proposant un dispositif de guidage perfectionné pour portes coulissantes qui supprime toutes les saillies prononcées du ou des rails dans l'habitacle du véhicule et qui présente toutes la souplesse et la fiabilité requises lors du coulissement de la porte pour l'ouvrir ou la fermer.

A cet effet, l'invention a pour objet un dispositif de guidage d'une porte coulissante de véhicule automobile par exemple et du type comportant au moins un galet porté par un bras solidaire de la porte et coopérant avec un rail qui est fixé à la caisse du véhicule de préférence à proximité de la bordure latérale du pavillon du véhicule et qui s'étend sensiblement parallèlement à cette bordure latérale, caractérisé en ce que ledit bras est fixé par une extrémité à la porte par l'intermédiaire d'une articulation à axe sensiblement vertical, tandis que l'autre extrémité du bras porte trois galets à axes également sensiblement verticaux, l'un de ces galets, intérieur au rail, roulant sur la face interne de ce rail et les deux autres galets roulant sur la face externe du rail qui comporte, du côté avant du véhicule, une extrémité repliée vers l'intérieur et constituant à elle seule une butée de fin de course pour le galet intérieur qui sert ainsi d'axe de pivotement du bras à la fermeture et à l'ouverture de la porte.

Ainsi, le bras articulé par ses deux extrémités respectivement à la porte et au rail permettra, avec fiabilité et souplesse, tant le rapprochement de la porte de la caisse du véhicule en fin de position de fermeture de la porte, tant le dégagement de la porte de la caisse du véhicule en début d'ouverture de la porte.

Suivant une autre caractéristique de ce dispositif, les axes des trois galets précités constituent respectivement et sensiblement les trois sommets d'un triangle équilatéral, tandis que l'extrémité repliée précitée du rail présente un rayon de courbure sensiblement égal au rayon du galet intérieur.

Mais d'autres caractéristiques et avantages de l'invention apparaîtront mieux dans la description détaillée qui suit et se réfère aux dessins annexés, donnés uniquement à titre d'exemple et dans lesquels :

- la figure 1 est une vue partielle et en coupe horizontale d'une porte coulissante et de la bordure latérale d'un pavillon de véhicule, cette coupe illustrant, en vue de dessus, le dispositif de guidage selon cette invention pour une position fermée de la porte, et pour une position partiellement ouverte de cette porte ; et

- la figure 2 est une vue suivant la flèche II de la figure 1.

En se reportant aux figures, on voit la bordure latérale 1 d'un pavillon ou toit de véhicule, ainsi qu'une porte P montée coulissante sur un côté ou les deux côtés d'un véhicule utilitaire par exemple.

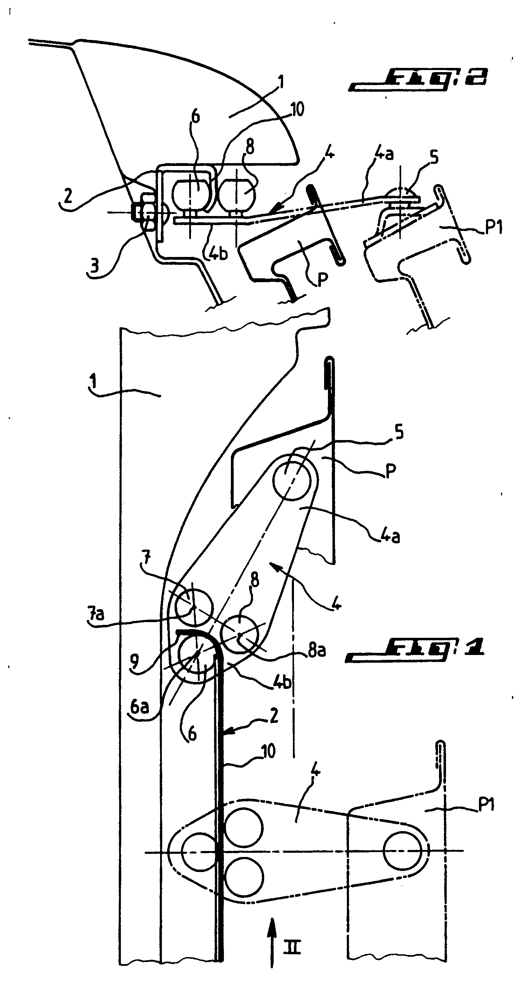

Un profilé rectiligne 2, présentant en section transversale la forme d'un U renversé, comme on le voit bien sur la figure 2, est fixé, par des boulons 3 par exemple, en partie haute du véhicule, en dessous de la bordure latérale 1 du pavillon. L'une des branches du U inversé formant le profilé 2, à savoir la branche extérieure au véhicule et repérée en 10 sur la figure 2, constitue un rail de guidage.

Conformément à l'invention, un bras ou analogue 4 est relié de façon articulée tant à la porte P qu'au rail 10, comme on le décrira en détail ci-après.

L'une 4a des extrémités du bras 4 est articulée par un axe sensiblement vertical 5 sur la porte P, comme on le voit bien sur les figures 1 et 2.

L'autre extrémité 4b du bras 4 porte trois galets 6, 7, 8 dont les axes respectifs 6a, 7a et 8a sont sensiblement verticaux, tout comme l'axe 5 précité.

L'un des galets 6 est intérieur au rail 10, c'est-à-dire roule sur la face interne de ce rail. Les deux autres galets 7, 8 roulent sur la face externe du rail 2.

Comme on le voit bien sur la figure 1, l'une des extrémités du rail 10 est repliée perpendiculairement vers l'intérieur du véhicule, en suivant un rayon de courbure sensiblement égal à celui du galet intérieur 6.

Revenant à la figure 1, on voit que les trois axes 6a, 7a et 8a des trois galets 6, 7 et 8 constituent sensiblement les trois sommets d'un triangle équilatéral. Ces trois galets, ainsi que leur agencement particulier permettent non seulement le coulissement par roulement du bras 4 et donc de la porte P sur le rail 10, mais constituent un axe de pivotement pour le bras 4, comme on l'expliquera dans la description qui suit du fonctionnement de la porte à la fermeture et à l'ouverture.

Lorsque la porte en position ouverte (représentée en traits mixtes et en P₁ sur les figures 1 et 2) est amenée en position de fermeture (position représentée en traits pleins sur les figures), les trois galets 6, 7, 8 sont neutralisés au niveau de la partie repliée 9 du rail 10 qui forme en quelque sorte une butée de fin de course pour le galet intérieur 6, lequel sert ainsi d'axe de pivotement pour le bras 4 qui est aussi monté pivotant par son extrémité 4a sur la porte P, de sorte que celle-ci, comme on le comprend, va se rapprocher de la caisse du véhicule pour se situer sensiblement dans le prolongement de la bordure latérale 1 du pavillon, comme on le voit bien en traits pleins sur les figures 1 et 2.

Par ailleurs, à l'ouverture de la porte P, celle-ci pivotera légèrement autour de l'articulation 5 du bras 4 qui pivotera également autour de l'axe 6a du galet 6, de façon à permettre le dégagement de ladite porte de la caisse du véhicule, ce après quoi la porte pourra rouler par l'intermédiaire des galets 6, 7, 8 le long du rail 10 pour s'ouvrir, comme matérialisé par la position P₁.

On a donc réalisé suivant l'invention un mécanisme de guidage de portes coulissantes qui est d'une conception mécanique simple, présente une excellente fiabilité de fonctionnement, ne risque pas de provoquer des coincements tant à l'ouverture qu'à la fermeture, et présente l'avantage d'éviter la présence de parties en saillie préjudiciables au volume de l'habitacle du véhicule.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

**Revendications**

1. Dispositif de guidage d'une porte coulissante de véhicule automobile par exemple et du type comportant un bras (4) solidaire par l'une (4a) de ses extrémités de la porte (P) et portant à son autre extrémité (4b) trois galets (6, 7, 8) à axes sensiblement verticaux (6a, 7a, 8a) coopérant avec un rail (10) fixé à la caisse du véhicule de préférence à proximité de la bordure latérale (1) du pavillon du véhicule, l'un (6) de ces galets, intérieur au rail (10), roulant sur la face interne de ce rail et les deux autres galets (7, 8) roulant sur la face externe du rail qui comporte, du côté avant du véhicule, une extrémité (9) repliée vers l'intérieur, caractérisé en ce que l'extrémité (4a) du bras (4) est fixée à la porte par l'intermédiaire d'une articulation à axe sensiblement vertical (5), tandis que les axes des trois galets (6, 7, 8) portés par l'autre extrémité (4b) du bras (4) constituent respectivement et sensiblement les trois sommets d'un triangle équilatéral, et l'extrémité repliée (9) du rail constitue à elle seule une butée de fin de course pour le galet intérieur (6) qui sert ainsi d'axe de pivotement du bras (4) à la fermeture et à l'ouverture de la porte (P).

2. Véhicule automobile, tel que par exemple véhicule utilitaire, muni d'un dispositif selon la revendication 1.

_Fig.2_

_Fig.1_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 249 953 (KIEKERT)<br>* Page 4, lignes 1-19; figure 2a *<br>--- | 1,2 | B 60 J 5/06 |
| Y | DE-A-2 062 822 (KIEKERT)<br>* Page 4, lignes 3-5; figure 2 *<br>--- | 1,2 | |
| A | DE-B-1 280 710 (VW)<br>* Colonne 3, lignes 2-6; figure 2 *<br>----- | 1,2 | |

**DOMAINES TECHNIQUES RECHERCHES (Int. Cl.5)**

B 60 J
B 61 D

Le présent rapport a été établi pour toutes les revendications

| Lieu de la recherche | Date d'achèvement de la recherche | Examinateur |
|---|---|---|
| LA HAYE | 13-09-1990 | FOGLIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire.

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)